# EUROPÄISCHE PATENTSCHRIFT

(11) **EP 1 993 869 B1**
(45) Veröffentlichungstag und Bekanntmachung des Hinweises auf die Patenterteilung: **04.05.2011**
(21) Anmeldenummer: 07723053.0
(22) Anmeldetag: 06.03.2007
(51) Int. Cl.: B60K 35/00

(54) **ANZEIGE- UND BEDIENSYSTEM**
DISPLAY AND OPERATOR COMMUNICATION SYSTEM
SYSTÈME D'AFFICHAGE ET DE COMMANDE

(30) Priorität: 06.03.2006 DE 102006010586
(43) Veröffentlichungstag der Anmeldung: 26.11.2008
(73) Patentinhaber: Rheinmetall Landsysteme GmbH, 24107 Kiel (DE)
(72) Erfinder: JERSCH, Uwe, 24161 Altenholz (DE); BRUHN, Ralf, 24259 Westensee (DE); LÜERS, Broder, 24796 Bredenbek (DE); EINFELDT, Hans-Jürgen, 24159 Kiel (DE)
(74) Vertreter: Dietrich, Barbara
(86) Internationale Anmeldenummer: PCT/EP2007/001908
(87) Internationale Veröffentlichungsnummer: WO 2007/101654

(56) Entgegenhaltungen:
- EP-A2- 0 925 989
- WO-A-00/34105
- US-A1- 2004 172 182

## Beschreibung

Die Erfindung betrifft ein als modulare Einheit gestaltetes Anzeige- und Bedienkonzept für insbesondere Kampffahrzeuge, die in der Regel auch gepanzert sein können.

Kampffahrzeuge werden in der Regel mittels direkter als auch indirekter Sicht des Fahrers aus dem Fahrzeug gelenkt. Ein derartiges gepanzertes Fahrzeug ist mit der DE 196 42 386 C1 offenbart. Die Anforderungen an die Anzeigen und die Bedienungen für den Fahrer steigen auch bei einem Kampffahrzeug stetig auch unter dem Einfluss moderner Techniken. Der vorhandene Platz im Fahrerbereich übersteigt jedoch den dafür notwendigen Platzbedarf. So besteht u. a. die Forderung der Integration eines Führungs- und Navigationssystems, um so dem Fahrer auch Navigationsdaten zusätzlich zur Verfügung stellen zu können. Eine Integration von mehreren Anzeige- und Bediengeräten unterschiedlicher neuer Teilsysteme sprengt aber den verfügbaren Verstauraum am Fahrerplatz und verhindert zudem das Einhalten der allgemeinen ergonomischen Anforderungen, wie Beinfreiheit des Fahrers, Schutzabforderungen etc.

Aus der zivilen Fahrzeugbranche sind, wie in der DE 92 15 019 U1 beschrieben, Bedien- und Anzelgegeräte oder -pulte bekannt, die einen Führungsrechner enthalten mit einem Prozessor und Arbeitsspeicher sowie Sensoren zur Gewinnung von Informationen aus der Umgebung. Das Bedienpult In der DE 92 15 019 U1 weist zwei Bildschirme auf, denen Tastenfelder zugeordnet sind. Auf einem Bildschirm kann eine Landkarte dargestellt werden, während auf dem anderen eine wahlweise Darstellung von unterschiedlichen Sensorinformationen aus der Umgebung möglich ist. Mehrere Mehrfach-Tastenfefder sind zwischen als auch um die Monitore eingebunden, wobei Tasten der Tastenfelder fest- und / oder variabel belegbar sind. Durch Betätigen von unterschiedlichen Tasten in den Feldern sind außerdem bestimmte Menüs wählbar, nach denen zusätzliche Informationen in die Bildschirmabbildung einblendbar sind, die Abbildung vergrößerbar oder verschiebbar sind und dergleichen.

Mit der WO 00/34105 A1 wird ein Lenkrad-Modul zum Starten und zur Kontrolle der Bewegung eines Fahrzeuges mit einem Bildschirm zur Anzeige der Motortemperatur, der Geschwindigkeit, des Öldrucks etc. publiziert. Das Modul erlaubt einem Bediener auszusuchen, weiche und wie er die Information angezeigt haben möchte. Die Daten erhält das Modul von einem Fahrzeug-Unit, das alle Fahrzeugfunktionen, wie beispielsweise die Klimaanlage oder die Position der Spiegel regelt. Mit dieser Unit verbunden ist eine weitere Anzeige in Form eines berührungesensitiven LCD Flachbildschirms. Der Bildschirm des Module kann ebenfalls berührungssensitiv sein.

Die EP 0 925 989 A2 beschreibt ein Modulsystem mit Radio/Navigationssystem (Standard-System) und verschiedenen weiteren Funktionen, die modulartig in das System eingebunden werden können. Dieses als Zentralmodul bezeichnete System ist (mittig) im Armaturenbrett eines Fahrzeuges eingebunden.

Die Erfindung greift hier die Aufgabe auf, eine Verbesserung der Anzeigen und das Bedienen für einen Fahrer insbesondere eines gepanzerten Kampffahrzeuges vorzunehmen.

Gelöst wird die Aufgabe durch die Merkmale des Patentanspruchs 1. Vorteilhafte Ausführungen sind in den Unteransprüchen enthalten.

Der Erfindung liegt die Idee zugrunde, mehrere für die zusätzlichen Teilssysteme benötigten Anzeige- und Bedieneinrichtungen derart zusammenzufassen, dass die Anzeigen- und Bedieneinrichtungen miteinander verschmelzen bzw. mehrere Aufgaben übernehmen, wodurch ein höherer Platzbedarf vermieden wird. So wird auf einen zusätzlichen Monitor zur Anzeige der Navigationsdaten verzichtet. Vielmehr können diese Daten auf einem zentralen Monitor dargestellt werden, der vorzugsweise Bestandteil des Bedienkastens des Fahrers ist. Auch ein Monitor für die Rückwärts- und Gefechtsfeldkamera (s) entfällt, da diese Kamerabilder beispielsweise mit einer Bild- in- Bild- Funktion gleichfalls auf dem zentralen Monitor darstellbar sind. Pictogramme sind beispielsweise als Ersatz der Schriftfeldanzeiger Fahrgestell auf dem Monitor anzeigbar. Die Darstellung mehrerer Funktionsüberwachungen spezieller Systeme kann gleichfalls auf selbigen Monitor erfolgen. Selbstverständlich sind am Bedienkasten Tasten bzw. Bedienelemente zur Bedienung der Anzeigen etc. vorhanden.

In Weiterführung der Erfindung wird in den Bedienkasten des Fahrers bevorzugt ein größerer zentraler Monitor als der bisher separat am Fahrerplatz eingebundene Monitor eingebaut. Der Bedienkasten ist des Weiteren um digitale Schnittstellen beispielsweise zur Übermittlung von Fahrgestell- oder auch Navigationsdaten an ein Führungssystem erweitert. Fahrgestellwarninformationen, IST-Informationen (Funktionsüberwachung, Funktionsprüfung, Fehlerlokalisierung), Kamerabilder sowie Navigationsdaten sind betriebsartenabhängig auf dem Monitor darstellbar.

In Weiterführung der Erfindung ist vorgesehen, dass beispielsweise die Anzeige der Motordrehzahl und / oder Fahrzeuggeschwindigkeit, Gangwahl etc. unabhängig vom Monitor auf einem bevorzugt Rund LC- Display am / im zentralen Lenkgriff erfolgen kann. Dieser ersetzt dann den herkömmlichen mechanischen Lenkgriff. Es besteht die Möglichkeit insbesondere im Zuge der ergonomischen Fahrplatzgestaltung auch andere Anzeigen im Lenkgriff zu integrieren.

Ein großer Vorteil dieses modularen Konzeptes ist die Integration eines einheitlichen Konzepts auf unterschiedliche Fahrzeugtypen. Neben der Verbesserung des Konzepts wird zudem eine Optimierung des Blickfeldes auf alle Anzeigen von Fahrgesteildaten, von ITS-Daten der pionier- und bergespezifischen Einrichtungen, auf Kamerabilder (Rückwärtsfahren, Werkzeugwechsel, Baggerbetrieb) und wenn erwünscht auf die Anzeigen von Navigationsdaten geschaffen. Insbesondere beim Einsatz auf anderen Führungssystemen ist eine Übermittlung von Fahrgestelldaten an länderspezifische Systeme nunmehr möglich.

Es wird eine einheitliches Bedien- und Anzeigesystem dem Fahrer zur Verfügung gestellt, egal, welchen Fahrzeugtyp er führt, wobei die Integration aller Funktionen und Anzeigen angeboten wird. Eine Reduzierung von Baugruppen im Bereich des Fahrerplatzes unterstützt die Möglich einer besseren ergonomischen Gestaltung des Platzes. Mit Hilfe eines größeren Monotorbildes ist eine übersichtlichere Darstellung der Informationen realisierbar, das Blickfeld auf Monitor und LC-Display wird verbessert. Durch die Integration von zusätzlichen elektrischen und digitalen Schnittstellen zur Übermittlung von Fahrgestell- und Navigationsdaten an unterschiedliche Führungssysteme wird die Einsatzmöglichkeit des Konzeptes erhöht.

Das Konzept ist erweiter- und einschränkbar. Es kann das Anzeigen der Navigationsdaten unterbinden, das Anzeigen der Fahrgestelldaten hingegen vornehmen oder umgekehrt. Es kann aber auch weitere insbesondere für den Fahrer relevante Informationen zusätzlich darstellen. Die Visualisierung der Navigationsdaten kann mittels einer auf dem Monitor abgebildeten Kompassrose und einer Anzeige der Fahrzeugausrichtung erfolgen Alternativen sind die Richtung des Kompasses und die Darstellung der Entfernung zum Wegpunkt.

Wie bereits erwähnt, kann eine Anzeige der Daten des LC-Displays alternativ oder zusätzlich auch auf dem Monitor oder eine separat platzierbare Schriftbildanzeige erfolgen. Aus der zivilen Fahrzeugtechnik ist die Darstellung der Geschwindigkeit mittels Segmente bekannt, wo mittels Farbcharakteristik der einzelnen Segmente Auskunft über die Geschwindigkeit des Fahrzeuges geben wird. Pro Segment werden im vorliegenden Fall beispielsweise 5 km/h definiert. Die Helligkeit dieser Anzeige ist dimmbar und, wie gleichfalls aus der zivilen Fahrzeugbranche bekannt, u. a. anhand der Helligkeit der Umgebung regelbar.

Anhand eines Ausführungsbeispiels mit Zeichnung soll die Erfindung näher erläutert werden. Es zeigt:
- Fig. 1: ein Anzeige- und Bediensystem und Rund LC- Kombianzeige für den Fahrer- platz,
- Fig. 2: Anzeigenmöglichkeiten auf dem Monitor des Anzeige- und Bediensystems,
- Fig. 3: eine mögliche Darstellung von Navigationsdaten auf dem Monitor,
- Fig. 4: die Rund LC- Kombianzeige im Lenkgriff integriert,
- Fig. 5: eine Schrifteldanzeige als Alternative zur LC- Kombianzeige.

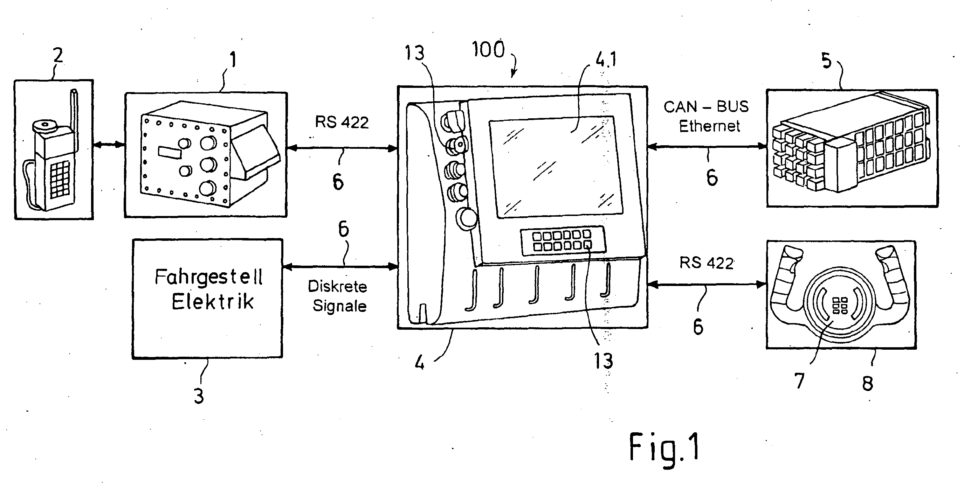

Fig. 1 zeigt das neu gestaltete Konzepts eines gemeinsamen Anzeige- und Bediensystems 100 mit den wesentlichen Baugruppen Navigationseinheit 1 (wenn erwünscht) ergänzbar durch ein GPS 2, Fahrgestellelektrik 3, bevorzugt einem Bedienkasten 4 mit wenigstens einem Monitor 4.1 und Rechner 5. Dieser ist bevorzugt Bestandteil eines fahrzeugeigenen Führungssystems, so dass vorhandene Einheiten des Fahrzeuges mitgenutzt werden können. Diese Baugruppen sind mit dem Bedienkasten 4 über elektrische Leitungen 6 verbunden. Insbesondere zur Kommunikation zwischen Rechner 5 und Bedienkasten 3 ist ein CAN-Bus oder dergleichen vorgesehen.

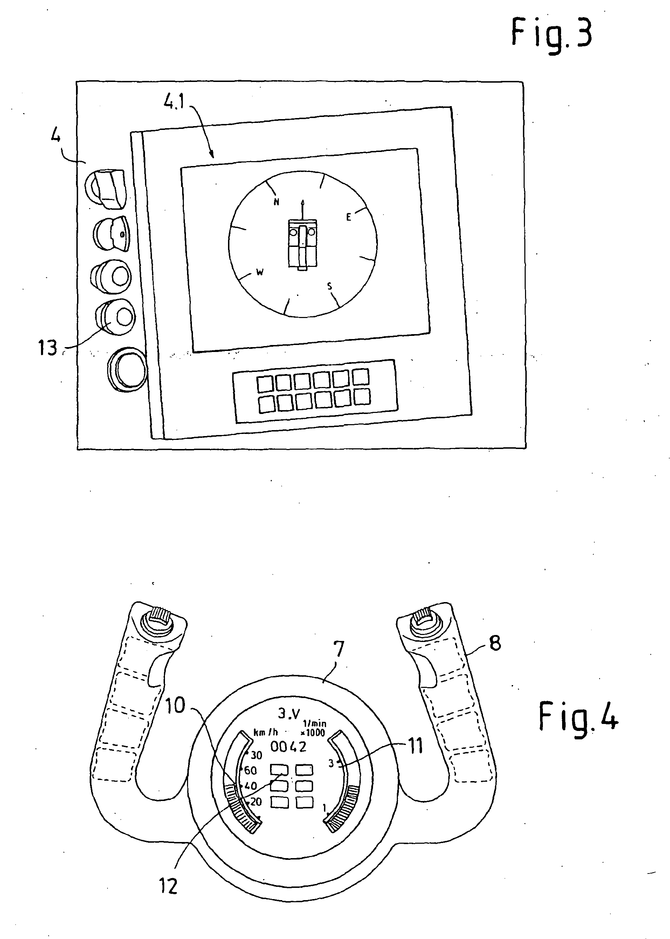

In einer besonderen Ausführung ist die Einbindung eines LC-Displays 7 im Lenkgriff 8 angedacht. Auf diesem können fahrzeugspezifische Daten wie Fahrzeuggeschwindigkeit 10, Motordrehzahl 11, Abblendlicht, Blinklicht links 12 etc. (Fig. 4) dargestellt werden. Das Display 7 kommuniziert dabei bevorzugt über den Bedienkasten 4, um die entsprechenden Informationen zu erhalten.

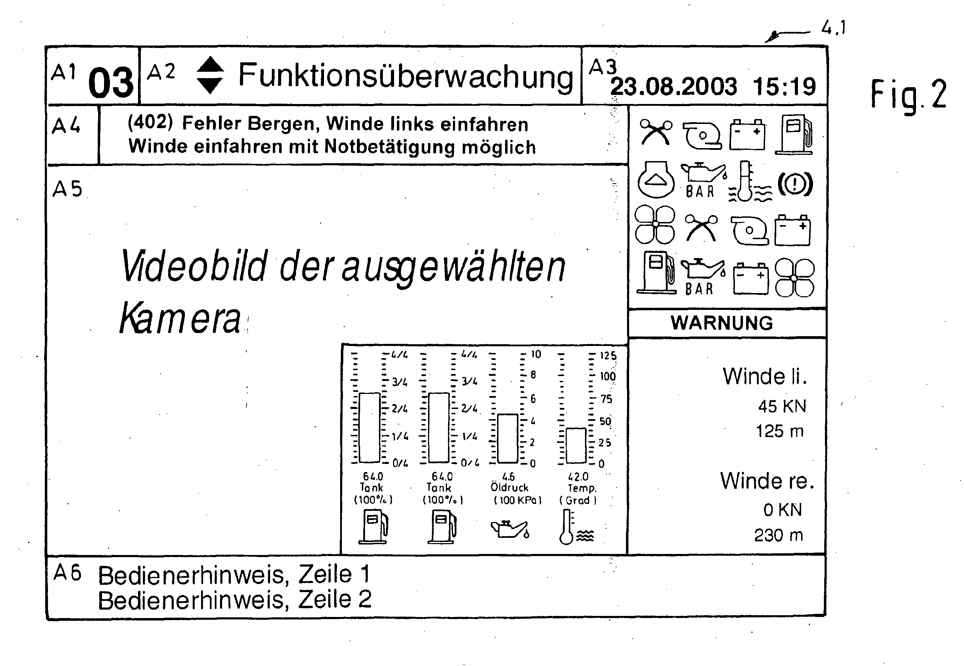

Die Fig. 2 und 3 zeigen mögliche Darstellungen von Funktions- und Informationsdaten für einen nicht näher dargestellten Fahrer auf dem Monitor 4.1. Während die Fig. 2 das Darstellen der Funktionsüberwachung charakterisiert, werden bei der Darstellung in Fig. 3 auch Navigationsdaten ausgegeben. Die unterschiedlichen Darstellungen können mit Hilfe der Tast- bzw. Bedienelemente 13 am Bedienkasten 4 zugeschaltet und dergleichen werden.

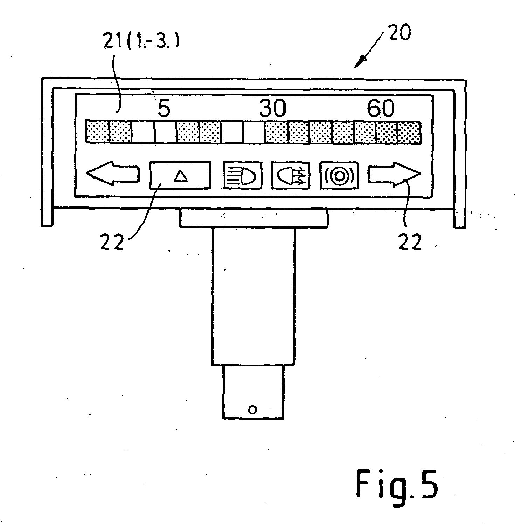

Fig. 5 zeigt eine Schriftfeldanzeige 20, die auch am Bedienkasten 4 oder Lenkgriff 8 integrierbar ist. Die Geschwindigkeit wird hier mittels Segmenten 21 dargestellt. Dabei werden beispielsweise die letzten 2 Segmente 21.3 rot unterlegt, die 4 Segmente 21.2 davor mit gelb und 9 Segmente 21.1 mit grün. Des Weiteren können die bekannten Warn- und Anzeigefelder 22 eingebunden werden. Die Stromversorgung erfolgt auch hier über das bordeigene Netz. Die entsprechenden Daten werden auch hierbei über den BUS 6 zur Verfügung gestellt.

## Patentansprüche

1. Anzeige- und Bediensystem (100) für ein Kampffahrzeug welches
• modular und einheitlich für verschiedene Fahrzeugtypen aufgebaut ist, mit
• wenigstens einem Bedienkasten (4) für einen Fahrer und einem darin integrierten Monitor (4. 1) zur Anzeige mehrerer und unterschiedlicher Funktions- und Informationsdaten sowie
• Tast- und / oder Bedienelementen (13) zum Um- und Zuschalten der gewünschten Anzelge auf dem Monitor (4.1),
• mit zusätzlich integrierten elektrischen und digitalen Schnittstellen zur Übermittlung von
o Fahrgesteil- und / oder Navigationsdaten,
o Fahrgesteilwarninformationen,
o IST-Informationen, Funktionsüberwachung, Funktionsprüfung, Fehleriokalisierung,
o IST-Daten der pionier- und bergespezifischen Einrichtungen,
o Kamerabildern,
• betriebsartenabhängig auf dem Monitor (4.1) darstellbar sind
wobei diese Daten, Informationen und Bilder.

2. Anzeige- und Bediensystem nach Anspruch 1, **dadurch gekennzeichnet, dass** beim Einsatz auf anderen Führungesystemen eine Übermittlung von Fahrgesteildaten an länderspezifische Systeme möglich ist.

3. Anzeige- und Bediensystem nach Anspruch 1 oder 2, **dadurch gekennzeichnet, dass** mit einer Bild-im-Bild-Funktion die Kamerabilder gleichfalls auf dem Monitor (4, 1) darstellbar sind.

4. Anzeige- und Bediensystem nach einem der Ansprüche 1 bis 3, **dadurch gekennzeichnet, dass** ein LC-Displays (7) im Lenkgriff (8) eingebunden ist, auf dem fahrzeugspezifische Daten wie Fahrzeuggeschwindigkeit (10), Motordrehzahl (11), Abblendlicht, Blinklicht links (12) etc. dargestellt werden können, wobei das Display (7) mit dem Bedienkasten (4) kommuniziert.

5. Kampffahrzeug nach Anspruch 4, **dadurch gekennzeichnet, dass** eine Schriftfeldanzeige (20) auch am Bedienkasten (4) oder Lenkgriff (8) Integrierbar ist.

6. Kampffahrzeug nach Anspruch 5, **dadurch gekennzeichnet, dass** die Geschwindigkeit mittels Segmenten (21) dargestellt werden kann.

7. Kampffahrzeug nach Anspruch einem der Ansprüche 1 bis 6, **dadurch gekennzeichnet, dass** Warn- und Anzelgefelder (22) eingebunden werden können.

8. Kampffahrzeug nach einem der Ansprüche 1 bis 7, **dadurch gekennzeichnet, dass** die Visualisierung der Navigationsdaten mittels einer auf dem Monitor (4.1) abgebildeten Kompassrose und einer Anzeige der Fahrzeugausrichtung erfolgen kann.

9. Kampffahrzeug nach Anspruch 8, **dadurch gekennzeichnet, dass** Alternativen der Visualisierung der Navigationsdaten die Richtung des Kompasses und die Darstellung der Entfernung zum Wegpunkt sind.

## Claims

1. Display and control system (100) for a combat vehicle which
• is of modular and standard design for different vehicle types, having
• at least one control box (4) for a driver, and having a monitor (4.1) integrated therein, for displaying a plurality of different function and information data items, and
• having key and/or control elements (13) for switching and connection of the desired display on the monitor (4.1),
• having additionally integrated electrical and digital interfaces for transmission of
o chassis and/or navigation data
o chassis warning information,
o ACT information, function monitoring, function testing, fault localization,
o ACT data relating to the pioneer-specific and recovery-specific specific devices
o camera images
• wherein these data items, information items and images can be displayed on the monitor (4.1) depending on the operating mode.

2. Display and control system according to Claim 1, **characterized in that**, when used on different reference systems, chassis data can be transmitted to nation-specific systems.

3. Display and control system according to Claim 1 or 2, **characterized in that** the camera images can likewise be displayed on the monitor (4.1) by means of a picture-in-picture function.

4. Display and control system according to one of Claims 1 to 3, **characterized in that** an LCD display (7) is included in the steering handle (8), on which vehicle-specific data such as the vehicle speed (10), engine rotation speed (11), dipped headlights, left indicator light (12) etc. can be displayed, wherein the display (7) communicates with the control box (4).

5. Combat vehicle according to Claim 4, **characterized in that** an alpha numeric display (20) can also be integrated on the control box (4) or steering handle (8).

6. Combat vehicle according to Claim 5, **characterized in that** the speed can be displayed by means of segments (21).

7. Combat vehicle according to one of Claims 1 to 6, **characterized in that** warning and display areas (22) can be included.

8. Combat vehicle according to one of Claims 1 to 7, **characterized in that** the navigation data can be visualized by means of a compass rose which is displayed on the monitor (4.1), and by means of a display of the vehicle alignment.

9. Combat vehicle according to Claim 8, **characterized in that** alternatives for visualization of the navigation data are the direction of the compass and the display of the range to the waypoint.

## Revendications

1. Système d'affichage et de commande (100) pour véhicule de combat, lequel
* est de construction modulaire et uniforme pour différents types de véhicule, comprenant
* au moins un coffret de commande (4) pour un conducteur et un moniteur (4.1) intégré dans celui-ci pour afficher plusieurs données fonctionnelles et informatives différentes ainsi que
* des éléments de test et/ou de commande (13) pour permuter et mettre en service l'indicateur souhaité sur le moniteur (4.1),
* comprenant des interfaces électriques et numériques intégrées supplémentaires pour la communication de
o données du châssis et/ou de navigation,
o informations d'alerte du châssis,
o informations effectives, surveillance du fonctionnement, contrôle du fonctionnement, localisation des défauts,
o données effectives des équipements d'exploration et de sauvetage,
o images de caméra,
* ces données, des informations ainsi que des images pouvant être représentées sur le moniteur (4.1) en fonction du mode de fonctionnement.

2. Système d'affichage et de commande selon la revendication 1, **caractérisé en ce que** lors de l'utilisation sur d'autres systèmes de guidage, une communication des données du châssis à des systèmes spécifiques au pays est possible.

3. Système d'affichage et de commande selon la revendication 1 ou 2, **caractérisé en ce que** les images de la caméra peuvent également être représentées sur le moniteur (4.1) avec une fonction d'image dans l'image.

4. Système d'affichage et de commande selon l'une des revendications 1 à 3, **caractérisé en ce que** dans le manche de direction (8) est intégré un afficheur à cristaux liquides (7) sur lequel peuvent être représentées des données spécifiques au véhicule telles que la vitesse du véhicule (10), la vitesse, de rotation du moteur (11), les feux de croisement, les feux clignotants (12), etc., l'afficheur (7) communiquant avec le coffret de commande (4).

5. Véhicule de combat selon la revendication 4, **caractérisé en ce qu'**un afficheur en cartouche (20) peut également être intégré sur le coffret de commande (4) ou le manche de direction (8).

6. Véhicule de combat selon la revendication 5, **caractérisé en ce que** la vitesse peut être représentée au moyen de segments (21).

7. Véhicule de combat selon l'une des revendications 1 à 6, **caractérisé en ce que** des champs d'alerte et d'affichage (22) peuvent être inclus.

8. Véhicule de combat selon l'une des revendications 1 à 7, **caractérisé en ce que** la visualisation des données de navigation peut être réalisée au moyen d'une rose des vents représentée sur le moniteur (4.1) et d'un indicateur de l'orientation du véhicule.

9. Véhicule de combat selon la revendication 8, **caractérisé en ce que** des variantes de la visualisation des données de navigation sont la direction de la boussole et la représentation de la distance jusqu'au point de cheminement.
